(19)

Europäisches Patentamt
European Patent Office
Office européen des brevets

(11) **EP 2 866 455 A1**

(12) **EUROPEAN PATENT APPLICATION**

(43) Date of publication:
**29.04.2015 Bulletin 2015/18**

(21) Application number: **13190140.7**

(22) Date of filing: **24.10.2013**

(51) Int Cl.:
*H04N 21/422* (2011.01)  *H04N 21/4223* (2011.01)
*H04N 21/439* (2011.01)  *H04N 21/4788* (2011.01)
*H04N 7/14* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **TP Vision Holding B.V.**
**1097 JB Amsterdam (NL)**

(72) Inventor: **Seynaeve, Dirck**
**1097 JB Amsterdam (NL)**

(74) Representative: **Busch, Patrick et al**
**TP Vision Europe B.V.**
**Intellectual Property Department**
**Prins Bernhardplein 200 - Floor 8**
**1097 JB Amsterdam (NL)**

(54) **Method and apparatus for video conferencing**

(57)     The invention relates to a method and apparatus for video conferencing between different parties co-watching video content on a TV-set at respectively a first and second location. The method comprising receiving video content; separating a first audio signal from the video content; displaying video content on the TV-set; converting the first audio signal in a first acoustic signal at the first location; receiving and converting a second acoustic signal in a second audio signal at the first location; filtering the second audio signal based on the first audio signal; transmitting the filtered second audio signal to the second location; receiving and converting the filtered second audio signal in the filtered second acoustic signal at the second location.

*Fig. 1*

**Description**

BACKGROUND OF THE INVENTION

The invention relates to a method and apparatus for videoconferencing between two parties co-watching video content on respective TV-sets at respectively a first and second location.

DESCRIPTION OF RELATED ART

A known video conference apparatus is provided with a video input interface configured to receive first video information; an audio input interface configured to receive first audio information; a transmitter configured to transmit first signals during a video call, wherein the first signals represent the first video information and the first audio information of a first party; a receiver configured to receive second signals during the video call, wherein the second signals represent second video information and second audio information of a second party; a video output interface configured to provide the second video information; an audio output interface configured to provide the second audio information. Furthermore, the apparatus may comprises a microphone that converts a second acoustic signal that may comprise sounds and/or speech related to the second audio information..

The known apparatus can be used for a video conference wherein the first and second parties are located at the first and second locations, which can be remote from each other. This apparatus can also be adapted to co-watch the video content at different locations. Thereto, the apparatus can be connected to for example a Web-enabled TV or a Smart TV connected to the Internet or a Local Area Network. The Web-enabled TV separates an audio signal from the video content and displays the video content and reproduce the audio signal at the respective locations in a first acoustic signal, or TV-sound. The known apparatus transmits the speech signal to an other apparatus via the internet. The other apparatus receives the speech signal and reproduces the received speech signal at the other location.

One of the disadvantages of the known apparatus is that when the first and second parties are co-watching the video content and are speaking to each other via the microphones at the respective locations, the microphone may also receive the TV-sound and transmits the speech signal, including the TV-sound, to the other location. When this speech signal is reproduced at the other location, the TV-sound is reproduced again and may give rise to a time delayed or echo of the TV-sound to the second party listening to the reproduced speech channel and the TV-sound.

SUMMARY OF THE INVENTION

It is an object of the invention to provide a method, apparatus and system that enables co-watching with an improved audio quality.

According to a first aspect this object is achieved by a method for video conferencing between different parties co-watching video content on a TV-set at respectively a first and second location comprising receiving video content; separating a first audio signal from the video content; displaying video content on the TV-set; converting the first audio signal in a first acoustic signal at the first location; receiving and converting the second acoustic signal in a second audio signal at the first location; filtering the second audio signal for reducing echo in the second audio signal based on the first audio signal; transmitting the filtered second audio signal; receiving and converting the filtered second audio signal in the filtered second acoustic signal.

In this way when the video content is received, the first audio signal or TV-sound signal can be separated from the video content and the video content can be displayed, the first audio signal is converted in a first acoustic signal or TV-sound, a second acoustic signal, that may comprise speech from the first party and a contribution of the TV-sound, is received and converted in a second audio signal or speech signal, for example by a microphone. The speech signal can be filtered based on the TV-sound signal in order to reduce the contributing of the TV sound signal in the second speech signal. The filtering may comprise an adaptive filter. The filtered speech signal is then transmitted to the second location. At the second location the filtered speech signal is received and converted, the second party hearing the converted filtered speech signal hears a reduced contribution or echo of the TV sound in the reproduced speech or voices.

In an embodiment the method the filtering of the second audio signal may comprise adaptive filtering. Adaptive filters are dynamic filters which iteratively alter their characteristics in order to achieve an optimal desired output, for example a minimal contribution of the TV sound in the filtered speech signal. An adaptive filter algorithmically alters its parameters in order to minimise a function of the difference between the desired output d (n) and its actual output y (n). This function is known as the cost function of the adaptive algorithm. Examples of adaptive filters are: a Least Mean Square, LMS, adaptive filter or a Normalized Least Mean Square, NMLS, adaptive filter.

In a further embodiment of the method comprises dynamic noise reduction in the second audio signal. Dynamic noise reducing can reduce noise in the speech signal.

In a further embodiment of the method comprises echo cancelling of the second audio signal. Echo cancelling can reduce echoes of speech or voices in the speech signal for example due to reflections of the speech or the voices in a room.

In a further embodiment of the method the second audio signal is received from a microphone. The microphone can be used to receive speech or voices of a party.

According to a second aspect of the invention this object is achieved by an apparatus for video conferencing between two parties co-watching video content at respectively a first and second location comprising;
a processor connectable to a TV-set arranged to separate a first audio signal from the video content;
a first loudspeaker arranged to convert the first audio signal in a first acoustic signal; a first microphone connectable to the processor arranged to convert a second acoustic signal in a second audio signal; wherein the processor is further arranged to filter the second audio signal based on the first audio signal;
a first communication unit arranged to transmit the filtered second audio signal to a second party at the second location via a communication network and to receive a third audio signal via the communication network;

Further advantageous embodiments are defined in the dependent claims.

BRIEF DESCRIPTION OF DRAWING

The above and other, more detailed aspects of the invention will be elucidated and described hereinafter, by way of example, with reference to the accompanying drawing.

Therein:

Fig. 1 shows an apparatus for video conferencing with a second party;
Fig. 2 shows an apparatus for video conferencing between two parties at respective two locations, and
Fig. 3 shows an apparatus for video conferencing with a separate box for a microphone and a camera.

DETAILED DESCRIPTION OF THE PRESENT INVENTION

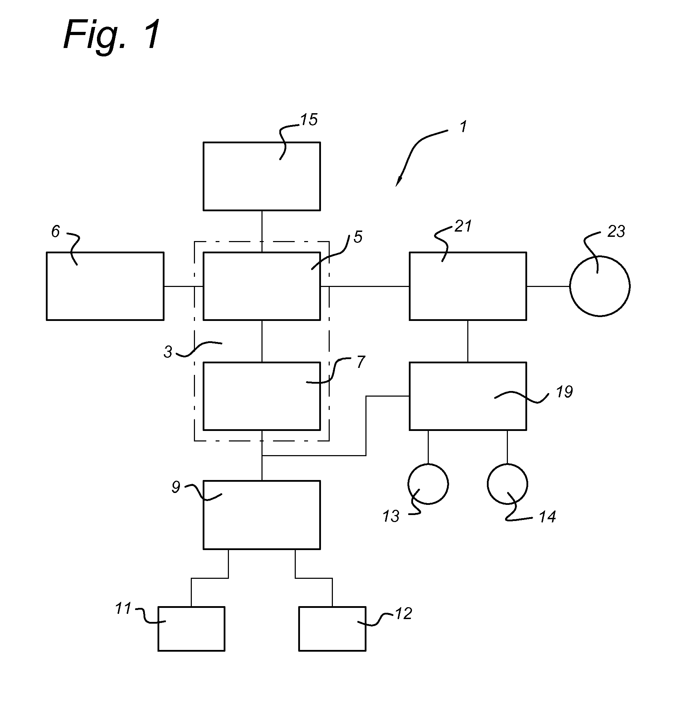

Fig.1 shows a first embodiment of the communication apparatus 1 according to the invention that can be used in a network comprising one or more of such apparatus. The communication apparatus, for example a TV-set 1, comprise a TV on a chip 3, provided with a TV processing apparatus 5 and an audio processing unit 7. Both units can be integrated in a single System on a Chip, SoC. The TV processing apparatus 5 separates video content into a video signal that can be watched on a display, for example, an LCD screen 6, and into a first audio signal or TV-sound signal for providing to an audio processing unit.

Furthermore, the TV-set 1 comprises an audio amplifier 9 for amplifying the processed TV-sound signal into two speaker signals from the audio processing unit 7. Furthermore, the TV-set is provided with two speakers 11, 12 for converting the speaker signals into two respective first acoustic signals or TV sound. Furthermore, the TV-set may comprise two microphones 13,14 for receiving and converting two second acoustic signals into second audio signals or speech signals. The speech signal can comprise speech or voices of persons present near the TV-set, background noise and a contribution of the TV-sound.

Furthermore, the TV-set comprises an audio processor 19 for filtering the second audio signal or speech signal, based on the first audio signal, for example, by subtracting a portion of the first audio signal from the speech signal according to

$$S_o(t) = a_1 . S_2(t) - a_2 . S_1(t) .$$

Wherein $S_0$ represents the filtered audio signal, $a_1$ represent a first coefficient, $S_1$ represents the first audio signals, $a_2$ represents a second coefficient, $S_2$ represents a second audio signal or the speech signal.

Furthermore, other methods for signal improvement can be applied, for example, dynamic noise filtering for example, a wideband stereophonic echo canceller (SAEC), far field noise suppression, which are well known to the person skilled in the art. Also, echo cancelling can be applied to reduce echoes of the speech in the speech signal.

In an embodiment adaptive filtering can be applied to reduce echoes of the TV sound in the received speech signal. The adaptive filtering may comprise a Least Mean Square, LMS, adaptive filter or a Normalized Least Mean Square, NMLS, adaptive filter.

As a result of this filtering the contribution of the first audio signal, the TV sound, to the second audio signal or speech signal is reduced.

Furthermore, the TV-set 1 may comprise a video camera 23, provided with, for example, a CMOS- image sensor for capturing images and a video content encoder 21 for encoding the captured video signal, for example, in an H.264 encoded signal, Furthermore, the video content encoder 21 combines the video coded signal with the filtered second audio signal. Furthermore, the TV-set 1 can be provided with a network interface 15 for an internet connection with a second communication apparatus or TV-set, identical with the first apparatus.

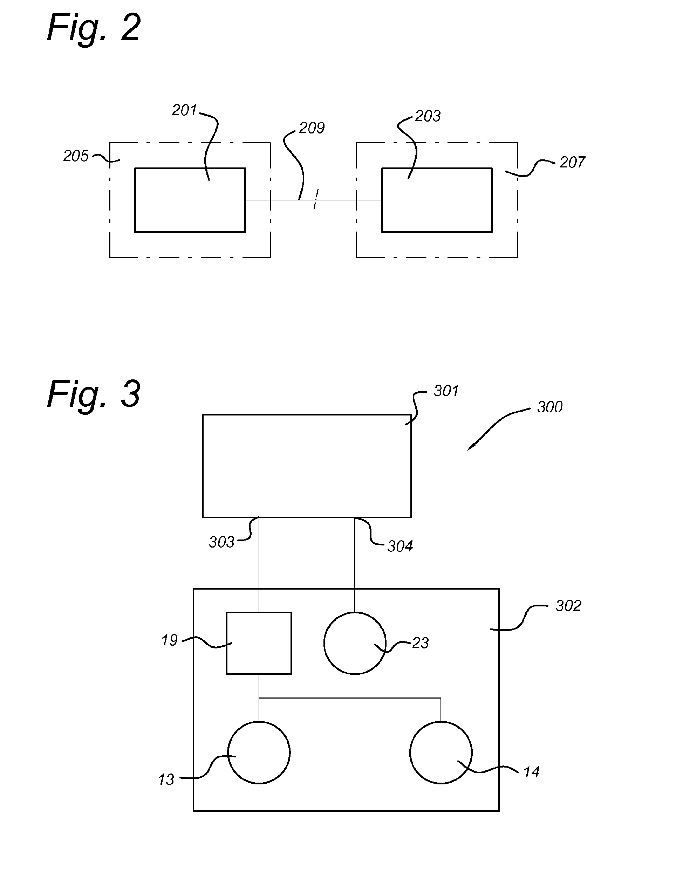

Fig. 2 shows an embodiment of the invention comprising two TV-sets, a first TV-set 201 at a first location 205 and a second TV-set 203 at a second location 207. The first TV-set 201 is connected to the second TV-set 203 via the Internet 209. The first and second TV-set 201, 203 are of an identical type as the TV-set 1 as described with reference to Fig. 1.

This arrangement of the two TV-sets enables video conferencing with a co-watching function wherein a party at the first location 205 and a second party at the second location 207 can simultaneously co-watch a TV program on the first TV-set 201 and second TV-set 203 respectively. The first party can communicate or speak with the second party and vice versa, the voices are received by the microphones 11, 12 of the TV-sets 201,203.

The received audio signal or speech signal can be filtered based on the TV sound signal, so that an echo of a TV sound in a reproduced speech signal received by the other party is minimized for example by an adaptive filtering of the speech as described above.

Furthermore, an echo of the speech in the second audio signal or speech signal due to reflections in a room can be cancelled using known echo cancelling techniques. The filtered audio signal can be transmitted to the other party at the second location together with a video signal of one of the parties image to the other party, This embodiment can also be used in an audio-only mode, wherein only the second audio signal is received/transmitted and no camera/video signal is required.

Fig. 3 shows an further embodiment 300, comprising a TV-set 301, similar as TV-set 1. comprising an interface for a LAN or the Internet, for example a Wi-Fi-connection or TCP/IP interface (not shown). Furthermore, in this embodiment microphones 13,14, an audio processor 19 and a camera 23, are integrated in a separate box 302, outside the TV-set 301. The video signal can be encoded as H.264 and provided to the TV-set via an USB bus 304 and the first audio signal from the TV set 301 can be delivered to the separate box via a wired connection, e.g. phone jackets 303 or a real-time wireless connection, e.g. via a Bluetooth or a ZigBee - connection. The Wi-Fi-connection or TCP/IP interface can also be integrated in the separate box 302.

In a further embodiment a conference system can be composed comprising a TV-set according to the invention at multiple locations respectively.

It should be noted that the above-mentioned embodiments illustrate rather than limit the invention, and that those skilled in the art will be able to design many alternative embodiments without departing from the scope of the appended claims. Other variations to the disclosed embodiments can be understood and effected by those skilled in the art in practicing the claimed invention, from a study of the drawings, the disclosure and the appended claims, In the claims the word "comprising" does not exclude other elements or steps, and the indefinite article "a" or "an" does not exclude a plurality. A single processor or other unit may fulfil the functions of several item recited in the claims. The mere fact that certain messages are recited in mutually difference dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication apparatus. Any reference signs in the claims should not be construed as limiting the scope.

**Claims**

1. Method for video conferencing between different parties co-watching video content on a TV-set at respectively a first and second location comprising receiving video content;
separating a first audio signal from the video content;
displaying video content on the TV-set;
converting the first audio signal in a first acoustic signal;
receiving and converting a second acoustic signal in a second audio signal;
filtering the second audio signal based on the first audio signal;
transmitting the filtered second audio signal;
receiving and converting the filtered second audio signal in a filtered second acoustic signal.

2. Method according to claim 1, wherein the filtering of the second audio signal comprises adaptive filtering.

3. Method according to claim 1 or 2 , further comprising dynamic noise reduction in the second audio signal.

4. Method according to claim 1 or 2, further comprising echo cancelling of the second audio signal.

5. Method according to any of the claims 1 - 4, wherein the second audio signal is a microphone signal.

6. Apparatus for video conferencing between a first and a second parties co-watching video content at respectively a first and second location comprising;
a processor arranged to separate a first audio signal from the video content;
a first loudspeaker arranged to convert the first audio signal in a first acoustic signal
a first microphone connectable to processor and arranged to convert a second acoustic signal in a second audio signal; wherein the processor is further arranged to filter the second audio signal based on the first audio signal;
a first communication unit arranged to transmit the filtered second audio signal to the second party via a communication network and
to receive a third audio signal from the second party via the communication network;

7. The apparatus of claim 6, wherein the processor being further arranged to combine the received third audio signal and the first audio signal;

8. The apparatus of claim 6, wherein the processor is arranged to perform adaptive filtering of the second audio signal.

9. The apparatus of claim 8, wherein the adaptive filtering comprises a Least Mean Square, LMS, adaptive filter or a Normalized Least Mean Square, NMLS, adaptive filter.

10. The apparatus of any of the claims 6 - 9, wherein the processor is further arranged to perform dynamic noise reduction on the second audio signal.

11. The apparatus of any of the claims 6- 10, wherein the processor is further arranged to perform echo cancelling with automatic gain control on the second audio signal.

12. The apparatus of any of the claims 6-11 comprising a camera arranged to capture an image of a party.

13. The apparatus of claim 12, wherein the microphone and the camera are located in a separate box.

14. The apparatus of claim 13, wherein the separate box comprises a connection to receive the first audio signal from the TV-set.

15. A conference system comprising a first and second apparatus according to claim 5, wherein the third signal received by the first apparatus is the filtered second signal transmitted by the second apparatus.

# Fig. 1

## Fig. 2

## Fig. 3

**EUROPEAN SEARCH REPORT**

Europäisches Patentamt
European Patent Office
Office européen des brevets

Application Number

EP 13 19 0140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/096626 A2 (MICRONAS GMBH [DE]; SIEBEN ULRICH [DE]; TEMERINAC MIODRAG [DE]) 13 October 2005 (2005-10-13) * the whole document * | 1-15 | INV. H04N21/422 H04N21/4223 H04N21/439 H04N21/4788 H04N7/14 |
| X | EP 2 611 205 A2 (SAMSUNG ELECTRONICS CO LTD [KR]) 3 July 2013 (2013-07-03) * the whole document * | 1-15 | |
| X | US 2010/272251 A1 (BANBA TATSUSHI [JP] ET AL) 28 October 2010 (2010-10-28) * the whole document * | 1-15 | |
| X | US 2003/005462 A1 (BROADUS CHARLES R [US] ET AL) 2 January 2003 (2003-01-02) * the whole document * | 1-15 | |
| A | EP 0 944 228 A1 (NIPPON TELEGRAPH & TELEPHONE [JP]) 22 September 1999 (1999-09-22) * the whole document * | 1-15 | |

TECHNICAL FIELDS SEARCHED (IPC)

H04N

The present search report has been drawn up for all claims

| Place of search | Date of completion of the search | Examiner |
|---|---|---|
| Berlin | 30 June 2014 | Blais, Denis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 19 0140

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2014

| Patent document cited in search report | | Publication date | Patent family member(s) | | Publication date |
|---|---|---|---|---|---|
| WO 2005096626 | A2 | 13-10-2005 | NONE | | |
| EP 2611205 | A2 | 03-07-2013 | CN | 103188571 A | 03-07-2013 |
| | | | EP | 2611205 A2 | 03-07-2013 |
| | | | JP | 2013141246 A | 18-07-2013 |
| | | | KR | 20130076947 A | 09-07-2013 |
| | | | US | 2013169739 A1 | 04-07-2013 |
| US 2010272251 | A1 | 28-10-2010 | CN | 101877750 A | 03-11-2010 |
| | | | JP | 2010258941 A | 11-11-2010 |
| | | | US | 2010272251 A1 | 28-10-2010 |
| US 2003005462 | A1 | 02-01-2003 | US | 2003005462 A1 | 02-01-2003 |
| | | | WO | 02096111 A1 | 28-11-2002 |
| EP 0944228 | A1 | 22-09-1999 | DE | 69908463 D1 | 10-07-2003 |
| | | | DE | 69908463 T2 | 13-05-2004 |
| | | | EP | 0944228 A1 | 22-09-1999 |
| | | | US | 6553122 B1 | 22-04-2003 |

EPO FORM P0459

For more details about this annex : see Official Journal of the European Patent Office, No. 12/82